# EUROPEAN PATENT SPECIFICATION

(11) **EP 2 610 148 B1**
(45) Date of publication and mention of the grant of the patent: **03.12.2014**
(21) Application number: 12190476.7
(22) Date of filing: 30.10.2012
(51) Int. Cl.: B62J 1/28, B62J 99/00

(54) **Motorcycle**
Motorrad
Motocyclette

(30) Priority: 28.12.2011 JP 2011289101
(43) Date of publication of application: 03.07.2013
(73) Proprietor: Yamaha Hatsudoki Kabushiki Kaisha, Shizuoka-ken Shizuoka 438-8501 (JP)
(72) Inventor: Suzuki, Makoto, Shizuoka-ken, 438-8501 (JP)
(74) Representative: Stöckeler, Ferdinand

(56) References cited:
- JP-A- 2004 182 108
- JP-A- 2005 088 798
- JP-U- H0 162 180

## Description

### TECHNICAL FIELD

The present invention relates to motorcycles.

### BACKGROUND ART

Motorcycles on which a passenger can be seated are often provided with a grab bar at the rear of the seat. Since such a grab bar is provided, the passenger seated on the seat can support his/her own body stably by stretching his/her arm rearward and grabbing the grab bar with the hand.

JP 2009-227024 A describes such a grab bar. The grab bar described in JP 2009-227024 A is formed in a substantially U-shape widening frontward. The passenger can support his/her body stably against the jolting back and forth as well as left and right by grabbing the right and left side portions of the substantially U-shape or the rear portion of the grab bar. Other examples of motorcycles having a grab bar at the rear of the seat are described in JP 2005-088798 A, JP 2004-182108 A and JP H01-62180 U.

### SUMMARY OF INVENTION

It is an object of the invention to provide a motorcycle that achieves an improvement in passenger comfort when a passenger is on board.

This object is achieved by a motorcycle of claim 1.

The present invention is based on the following findings of the inventors. When a motorcycle is accelerated or decelerated, the passenger's body tends to be jolted back and forth. The passenger supports the load in the fore-and-aft directions by grabbing the grab bar. If the load can be supported more easily, it is convenient for the passenger and the passenger can sit on the seat more stably. Accordingly, it appears conceivable to provide a backrest at the rear of the seat and support a portion of the load by the backrest.

However, when a backrest is provided, the passenger is hindered from stretching his/her arm rearward because the backrest gets in the way. As a consequence, there are cases in which the passenger cannot grab the grab bar easily and the passenger comfort is not improved as expected.

The present invention provides a motorcycle comprising: a first seat for a rider to be seated; a second seat, disposed rearward of the first seat, for a passenger to be seated; a grab bar having a left side portion extending rearward from a left side of the second seat, a right side portion extending rearward from a right side of the second seat, and a coupling portion coupling the left side portion and the right side portion to each other at the rear of the second seat; and a hip guard disposed between the second seat and the coupling portion with respect to a vehicle fore-and-aft direction and coupling the left side portion and the right side portion to each other. An upper end of the hip guard is disposed at a position higher than the second seat and the coupling portion. An opening is formed between the hip guard and the coupling portion, as viewed in plan.

The above-described motorcycle has the hip guard, which restricts a rearward movement of the buttocks of the passenger, in addition to the grab bar. As a result, the buttocks can be supported from the rear when the riding position of the passenger is prone to be shifted rearward, such as when the motorcycle starts suddenly. Therefore, the passenger can support part of his/her weight by grabbing the grab bar while supporting another part of the weight by the hip guard. This improves passenger comfort when a passenger is on board. Unlike the backrest, the hip guard is unlikely to get in the way when the passenger stretches an arm rearward. Moreover, since an opening is formed between the hip guard and the coupling portion of the grab bar, as viewed in plan, the passenger can grab the coupling portion easily by inserting his/her fingers in the opening. Therefore, providing the hip guard does not impair the primary function of the grab bar.

In one embodiment of the present invention, a height difference between the upper end of the hip guard and an upper end of the coupling portion of the grab bar is smaller than a height difference of the upper end of the coupling portion of the grab bar from one of a lower end of the left side portion and a lower end of the right side portion that is lower than the other.

Thus, the hip guard protrudes upwardly only by a small amount relative to the coupling portion of the grab bar, and therefore, the hip guard is unlikely to get in the way when the passenger stretches an arm rearward.

In one embodiment of the present invention, the grab bar and the hip guard are integrally formed with each other.

In addition, since there is no chattering and position shifting between the grab bar and the hip guard, it is possible to improve passenger comfort when a passenger is on board.

In one embodiment of the present invention, the grab bar and the hip guard are formed of a resin.

This allows the grab bar to have a lighter weight than when the grab bar is formed of a metal. Moreover, the passenger is less likely to feel the coldness or the heat of the grab bar when the passenger touches the grab bar in the case where the motorcycle is used in a cold region or an extremely hot region.

In one embodiment of the present invention, the opening has left and right edge portions each formed in a circular arcuate shape, as viewed in plan.

In comparison with the case where the left and right edge portions of the opening are in an angular shape, the passenger can grab the left side portion, the right side portion, or the coupling portion more easily when the passenger inserts his/her fingers in the opening and grabs any of the portions, and moreover the passenger is less likely to suffer a pain in his/her fingers.

In the present invention, each of the left side portion and the right side portion of the grab bar has a groove recessed upward. Each of the grooves is deeper in a front portion of each of the left and right side portions than in a rear portion of each of the left and right side portions.

By inserting the fingers in the grooves, the left side portion and the right side portion can be grabbed easily. Since the groove is deeper in the front portion than in the rear portion, the passenger can grab the left side portion and the right side portion firmly.

In one embodiment of the present invention, the coupling portion of the grab bar has a groove recessed upward. The groove of the coupling portion is shallower than the groove of the left side portion and the groove of the right side portion.

By inserting the fingers in the grooves, the left side portion, the right side portion, and the coupling portion can be grabbed easily. Moreover, since an opening is formed between the hip guard and the coupling portion of the grab bar as viewed in plan, the passenger may grab the coupling portion by gripping the entire circumference of the coupling portion, not by inserting the fingers in the groove. The passenger often grips the entire circumference of the coupling portion in order to ride the motorcycle more comfortably. The above-described structure allows the passenger to grip the entire circumference of the coupling portion more easily because the groove of the coupling portion is shallower than those of the left side portion and the right side portion.

In one embodiment of the present invention, the hip guard has a groove recessed upward and formed in a rear edge portion thereof.

By inserting the fingers in the groove, the passenger can grab the hip guard easily. As a result, a wider variety of uses are made possible.

In one embodiment of the present invention, a height difference between an upper end of the hip guard and an upper end of the second seat is smaller than a height difference between the upper end of the second seat and a lower end of a top face of the first seat.

Thus, the hip guard protrudes upwardly only by a small amount relative to the seat including the first seat and the second seat, and therefore, the hip guard is unlikely to get in the way when the passenger stretches an arm rearward.

In one embodiment of the present invention, the motorcycle further comprises a vehicle body cover. A rear end of the coupling portion of the grab bar is positioned frontward of a rear end of the vehicle body cover.

Since the grab bar does not protrude rearward, the size of the motorcycle does not become larger. Moreover, the passenger can grab the grab bar easily.

### ADVANTAGEOUS EFFECTS OF INVENTION

Thus, the present invention makes it possible to provide a motorcycle that achieves an improvement in passenger comfort when a passenger is on board.

### BRIEF DESCRIPTION OF DRAWINGS

Fig. 1 is a left side view illustrating a motorcycle according to one embodiment of the present invention;
Fig. 2 is a plan view illustrating a rear portion of the motorcycle according to one embodiment of the present invention;

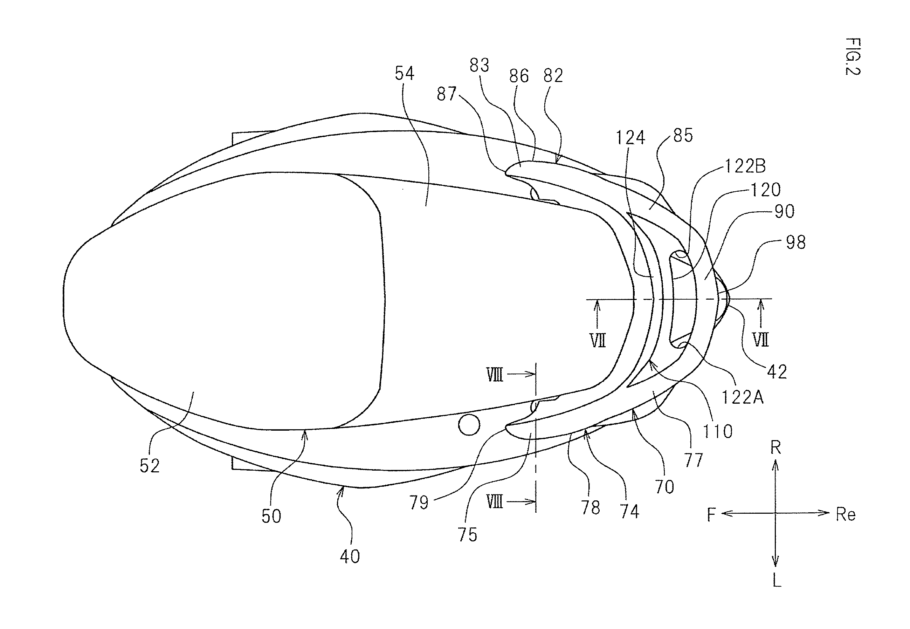

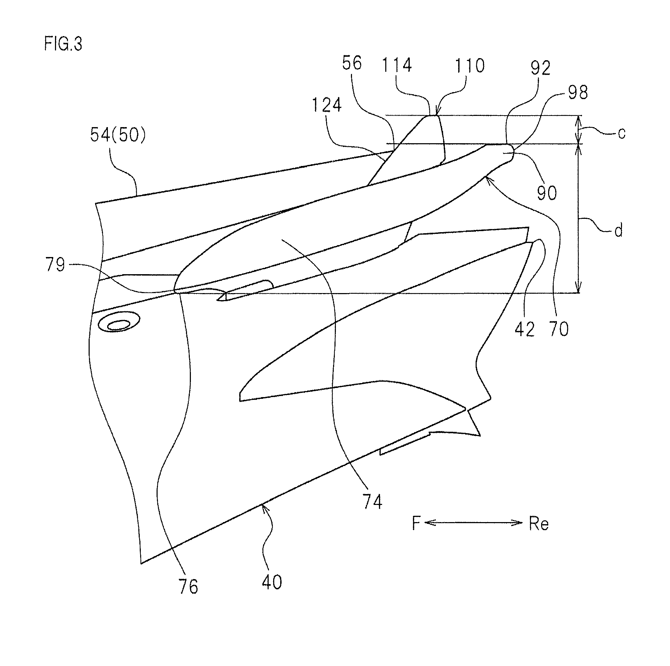

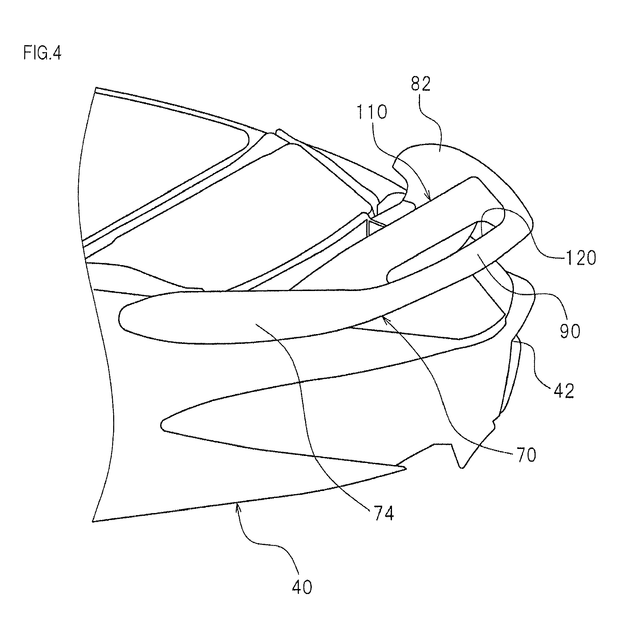

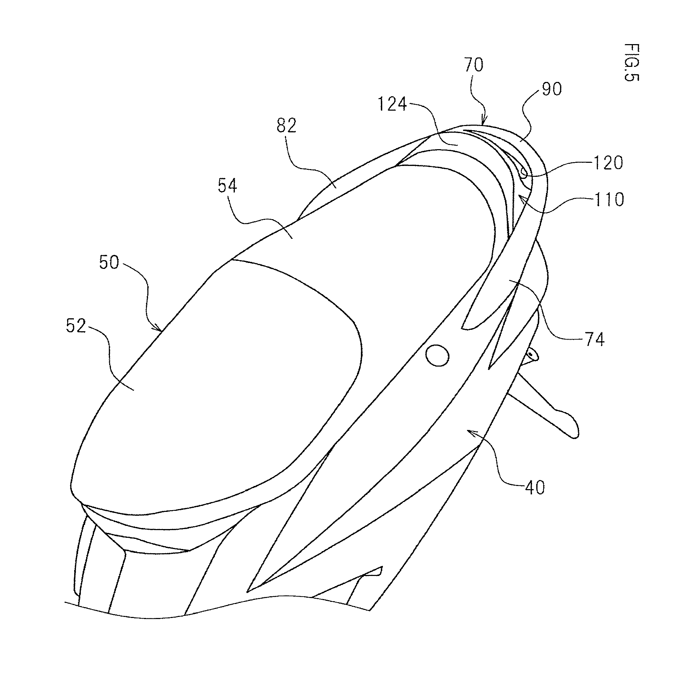

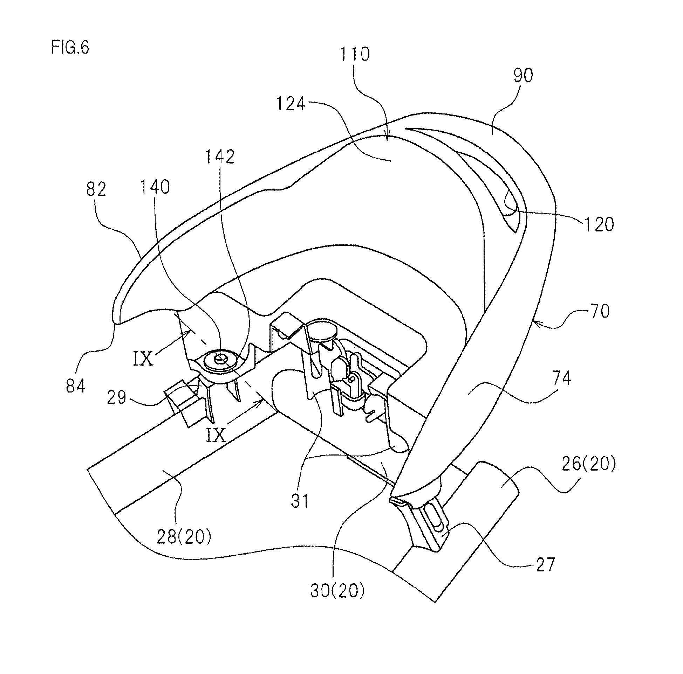

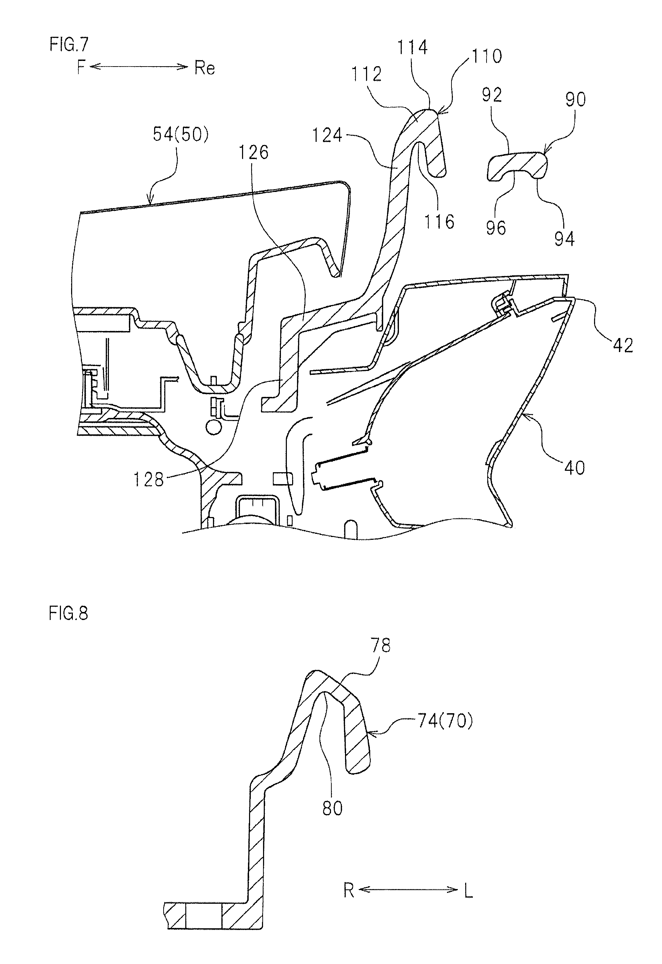

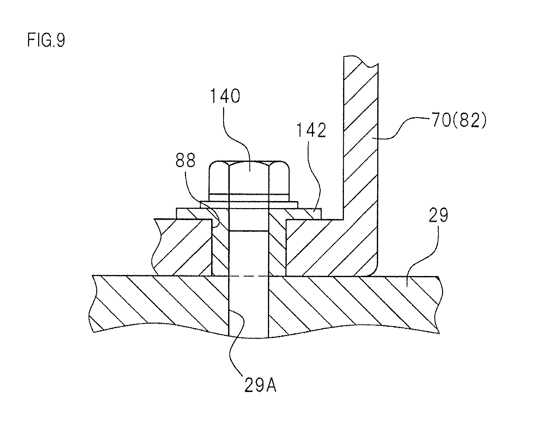

Fig. 3 is a left side view illustrating a grab bar and a hip guard of the motorcycle according to one embodiment of the present invention; Fig. 4 is a perspective view illustrating the grab bar and the hip guard of the motorcycle according to one embodiment of the present invention; Fig. 5 is a perspective view illustrating the grab bar and the hip guard of the motorcycle according to one embodiment of the present invention; Fig. 6 is a perspective view illustrating the grab bar and the hip guard of the motorcycle according to one embodiment of the present invention; Fig. 7 is a cross-sectional view taken along line VII-VII in Fig. 2; Fig. 8 is a cross-sectional view taken along line VIII-VIII in Fig. 2; and Fig. 9 is a cross-sectional view taken along line IX-IX in Fig. 6.

### DESCRIPTION OF EMBODIMENTS

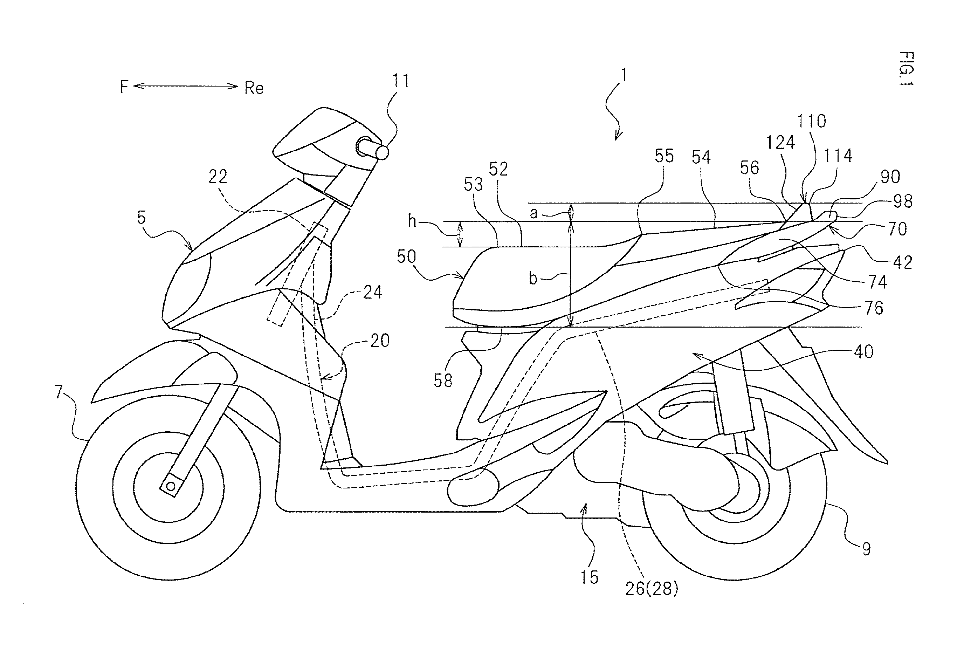

Hereinbelow, embodiments of the present invention will be described. As illustrated in Fig. 1, a motorcycle 1 according to the present embodiment is a scooter type motorcycle 1. The motorcycle is one example of a straddle-type vehicle. The motorcycle according to the present invention is not limited to the scooter type motorcycle 1. The motorcycle according to the present invention may be any other type of motorcycle, such as a moped type motorcycle, an off-road type motorcycle, or an on-road type motorcycle.

In the following description, the terms "front," "rear," "left," and "right" respectively refer to front, rear, left, and right as defined based on the perspective of the rider of the motorcycle 1. Reference characters F, Re, L, and R in the drawings indicate front, rear, left, and right, respectively.

The motorcycle 1 has a vehicle body 5, a front wheel 7, a rear wheel 9, and an engine unit 15 for driving the rear wheel 9. The vehicle body 5 has a body frame 20 and a vehicle body cover 40 mounted to the body frame 20. A handlebar 11, which is operated by the rider, and a seat 50, on which the rider is to be seated, are mounted to the body frame 20. The engine unit 15 is what is called a unit swing type engine unit having an engine, which is not shown in the drawings. The engine unit 15 is supported by a pivot shaft, which is not shown in the drawings, swingably relative to the body frame 20.

The body frame 20 has a main frame 24 extending rearward and obliquely downward from a head pipe 22, left and right seat frames 26 and 28 extending rearward and obliquely upward from the main frame 24, and a cross-member 30 (see Fig. 6) provided between the left and right seat frames 26 and 28.

As illustrated in Figs. 1 and 5, the seat 50 has a first seat 52 for the rider to be seated, and a second seat 54 for the passenger to be seated. The second seat 54 is positioned rearward of the first seat 52. The first seat 52 and the second seat 54 are integrally formed with each other. In the present embodiment, a front end portion 55 of the top face of the second seat 54 is formed so as to be higher than a front end portion 53 of the top face of the first seat 52.

A grab bar 70, for the passenger seated on the second seat 54 to hold on to, is disposed at the rear of the seat 50, that is, at the rear of the second seat 54.

As illustrated in Fig. 2, the grab bar 70 has a left side portion 74, a right side portion 82, and a coupling portion 90. As viewed in plan, the left side portion 74 extends rearward from the left side of the second seat 54, and the right side portion 82 extends rearward from the right side of the second seat 54. The coupling portion 90 couples the left side portion 74 and the right side portion 82 to each other at the rear of the second seat 54. In the present embodiment, the left side portion 74 is formed so as to extend obliquely rightward and rearward, as viewed in plan. The right side portion 82 is formed so as to extend obliquely leftward and rearward, as viewed in plan. The coupling portion 90 is formed at a position facing a later-described hip guard 110. That is, the left side portion 74 and the right side portion 82 are formed so as to extend frontward at a predetermined angle respectively from the leftward and rightward end portions (widthwise end portions) of the coupling portion 90.

In the present embodiment, the left side portion 74 is formed so as to extend rearward and obliquely upward when viewed from the side, as illustrated in Fig. 3. As illustrated in Fig. 1, a lower end 76 of the left side portion 74 is disposed at a position lower than a lower end 53 of the top face of the first seat 52 (in the present embodiment, the front end portion 53 of the first seat 52 is the lower end of the top face of the first seat 52). In addition, the lower end 76 of the left side portion 74 is disposed at a position lower than a rear end 42 of the vehicle body cover 40. The right side portion 82 is configured likewise. In the present embodiment, the left side portion 74 and the right side portion 82 are formed in a bilaterally symmetrical shape. However, the left side portion 74 and the right side portion 82 may not be formed in a bilaterally symmetrical shape. The left side portion 74 and the right side portion 82 may be formed, for example, so as to be horizontal to the ground. In other words, the left side portion 74 and the right side portion 82 may be formed so as to extend in a horizontal direction. Alternatively, the left side portion 74 and the right side portion 82 may be formed so as to extend rearward and obliquely downward.

In the present embodiment, a distal end portion 79 of the left side portion 74 and a distal end portion 87 of the right side portion 82 are disposed at approximately a mid-portion of the front-to-rear length of the second seat 54, as illustrated in Fig. 2.

In the present embodiment, a rear end 98 of the coupling portion 90 of the grab bar 70 is positioned frontward of a rear end 42 of the vehicle body cover 40, as illustrated in Fig. 3. Since the grab bar 70 does not protrude rearward from the rear end 42 of the vehicle body cover 40, the front-to-rear length of the motorcycle 1 can be prevented from becoming longer even if the grab bar 70 is provided. In other words, the motorcycle 1 can be made compact in size. In addition, as illustrated in Fig. 3, an upper end 92 of the coupling portion 90 of the grab bar 70 is formed at a position higher than an upper end 56 of the second seat 54. By setting the position of the upper end 92 of the coupling portion 90 to be higher than the upper end 56 of the second seat 54 in this way, the passenger is allowed to grip the coupling portion 90 easily.

As illustrated in Fig. 2, the grab bar 70 is formed in a substantially U-shape as viewed in plan by the left side portion 74, the coupling portion 90, and the right side portion 82. It should be noted that the grab bar 70 may be formed, for example, in a substantially semi-circular shape or in a substantially semi-ellipsoidal shape as viewed in plan.

The motorcycle 1 has a hip guard 110 for restricting a rearward movement of the buttocks of the passenger seated on the second seat 54. The hip guard may also be called a "cantle" or a "lower back rest".

The hip guard 110 is a member the height of which is relatively low, and is thus different from what is called a backrest. The hip guard 110 is not a member for supporting the back of the passenger. The hip guard 110 is a member having a lower height than the backrest. It should be noted that the height of the hip guard 110 herein refers to the height thereof from the upper end 56 of the second seat 54.

The hip guard 110 is disposed between the second seat 54 and the coupling portion 90 with respect to a fore-and-aft direction of the motorcycle 1. The hip guard 110 couples the left side portion 74 and the right side portion 82 of the grab bar 70 to each other. In the present embodiment, the hip guard 110 is formed in a circular arcuate shape along the rear edge of the second seat 54, as illustrated in Fig. 2. Therefore, the comfort of the passenger is improved. An upper end 114 of the hip guard 110 is disposed at a position higher than the upper end 56 of the second seat 54 and the upper end 92 of the coupling portion 90.

As illustrated in Fig. 2, a portion of the second seat 54 is disposed between the left side portion 74 and the right side portion 82 of the grab bar 70 and in front of the hip guard 110. As illustrated in Fig. 7, the hip guard 110 has a first vertical wall 124 for restricting a rearward movement of the buttocks of the passenger, a bottom wall 126 extending from an end portion of the first vertical wall 124 to the front of the vehicle, and a second vertical wall 128 extending vertically downward from an end portion of the bottom wall 126. A rear end portion of the second seat 54 is placed above the bottom wall 126. The first vertical wall 124 is disposed so as to extend upward from below the second seat 54. Since most of the hip guard 110 is disposed within the vehicle body cover 40, the hip guard 110 shows high rigidity. In addition, the first vertical wall 124 is inclined downwardly from the upper end 114 of the hip guard 110 toward the left side portion 74 and the right side portion 82. Therefore, the hip guard 110 does not get in the way at the connecting portions of the hip guard 110 with the left side portion 74 and the right side portion 82. As a result, the passenger can grab the left side portion 74 and the right side portion 82 easily.

In the present embodiment, the grab bar 70 and the hip guard 110 are integrally formed with each other. Since the grab bar 70 and the hip guard 110 are integrally formed with each other, the number of parts is reduced, and the assembling is facilitated.

In the present embodiment, the grab bar 70 and the hip guard 110 are formed of a resin, such as a synthetic resin. The weight of the grab bar 70 and the hip guard 110 can be made lighter in comparison with the case where the grab bar 70 and the hip guard 110 are formed of a metal. Moreover, because resin has a lower thermal conductivity than metal, the grab bar 70 and the hip guard 110 can be prevented from becoming too cold and too hot under the use conditions in cold regions and extremely hot regions.

Note that the grab bar 70 and the hip guard 110 may be made of separate parts. The grab bar 70 and the hip guard 110 may be individually formed, and thereafter, they may be fitted to the motorcycle 1. Moreover, the grab bar 70 and the hip guard 110 may be formed of different materials from each other.

An opening 120 is formed between the hip guard 110 and the coupling portion 90 of the grab bar 70 as viewed in plan (see also Fig. 4). The shape of the opening 120 is not particularly limited. Preferably, left and right edge portions 122A and 122B of the opening 120 are formed in a circular arcuate shape (substantially in a semi-circular shape).

As illustrated in Fig. 3, in the present embodiment, the hip guard 110 is formed so that a height difference c between the upper end 114 of the hip guard 110 and the upper end 92 of the coupling portion 90 of the grab bar 70 is smaller than a height difference d between the upper end 92 of the coupling portion 90 and the lower end 76 of the left side portion 74 of the grab bar 70. Thus, the hip guard 110 protrudes upwardly only by a small amount relative to the coupling portion 90 of the grab bar 70. Therefore, when the passenger stretches an arm rearward, the hip guard 110 does not get in the way, so that the passenger can grab the grab bar 70 easily.

In the present embodiment, the left side portion 74 and the right side portion 82 are formed in a bilaterally symmetrical shape, so the height of the lower end 76 of the left side portion 74 and that of the lower end 84 of the right side portion 82 (see Fig. 6) from the ground level are substantially the same. However, when the height from the ground level of the lower end 76 of the left side portion 74 and that of the lower end 84 of the right side portion 82 are different from each other, the height difference d may be set to be a difference of the upper end 92 of the coupling portion 90 of the grab bar 70 from either one of the lower end 76 of the left side portion 74 and the lower end 84 of the right side portion 82 that is lower than the other. In other words, the hip guard 110 is formed so that a height difference c between the upper end 114 of the hip guard 110 and the upper end 92 of the coupling portion 90 of the grab bar 70 is smaller than a height difference d of the upper end 92 of the coupling portion 90 of the grab bar 70 from either one of the lower end 76 of the left side portion 74 and the lower end 84 of the right side portion 82 that is lower than the other.

In addition, as illustrated in Fig. 1, the hip guard 110 is formed so that the upper end 114 of the hip guard 110 is disposed at a position higher than the upper end 56 of the second seat 54. The hip guard 110 is formed so that a height difference a between the upper end 114 of the hip guard 110 and the upper end 56 of the second seat 54 is smaller than a height difference b between the upper end 56 of the second seat 54 and the lower end 58 of the first seat 52. In addition, the height difference a between the upper end 114 of the hip guard 110 and the upper end 56 of the second seat 54 is smaller than a height difference h between the upper end 56 of the second seat 54 and the lower end 53 of the top face of the first seat 52 (in the present embodiment, the front end portion 53 of the first seat 52 is the lower end of the top face of the first seat 52).

The height difference a between the upper end 114 of the hip guard 110 and the upper end 56 of the second seat 54 is typically from about 10 cm to about 20 cm, for example, about 15 cm. It should be noted, however, that the specific value of the difference a is not limited to the just-mentioned values.

Fig. 7 is a cross-sectional view taken along line VII-VII in Fig. 2, which shows the cross-sectional structures of the coupling portion 90 and the hip guard 110. Fig. 8 is a cross-sectional view taken along line VIII-VIII in Fig. 2, which shows the cross-sectional structure of the left side portion 74.

As illustrated in Fig. 7, a groove 96 recessed upward is formed in a lower portion 94 of the coupling portion 90 of the grab bar 70. As illustrated in Fig. 8, a groove 80 recessed upward is formed in a left edge portion 78 of the left side portion 74 of the grab bar 70. Likewise, a groove (not shown) recessed upward is formed in a right edge portion 86 of the right side portion 82 of the grab bar 70.

In the present embodiment, the groove 80 formed in the edge portion 78 of the left side portion 74 of the grab bar 70 is deeper in a front portion 75 of the left side portion 74 than in a rear portion 77 thereof. Likewise, the groove (not shown) formed in the edge portion 86 of the right side portion 82 is deeper in a front portion 83 of the right side portion 82 than in a rear portion 85 thereof. The groove 80 may be formed so that its depth becomes deeper toward the front from the rear portion 77 of the left side portion 74 (the boundary portion between the left side portion 74 and the coupling portion 90). Likewise, the groove formed in the edge portion 86 of the right side portion 82 may be formed so that its depth becomes deeper toward the front from the rear portion 85 of the right side portion 82 (the boundary portion between the right side portion 82 and the coupling portion 90). Examples of such a groove include a groove whose depth changes seamlessly and a groove whose depth changes stepwise. The depth of the groove 80 of the left side portion 74 and the groove of the right side portion 82 is from about 5 mm to about 10 mm in the rear portion 77 of the left side portion 74 and in the rear portion 85 of the right side portion 82, and from about 35 mm to about 40 mm in the front portion 75 of the left side portion 74 and in the front portion 83 of the right side portion 82. The left-right length (widthwise length) of the groove 80 of the left side portion 74 and the groove of the right side portion 82 is from about 5 mm to about 30 mm. When the passenger grabs the left side portion 74 and/or the right side portion 82 of the grab bar 70, the passenger is likely to put the index finger, the middle finger, the ring finger, and the little finger into the grooves in that order from the front to the rear. By making the groove 80 deeper in the front portion 75 than the rear portion 77 of the left side portion 74, the passenger is allowed to grab the left side portion 74 easily. The same applies to the right side portion 82. In addition, by making the groove in the rear portion 77 of the left side portion 74 and the groove in the rear portion 85 of the right side portion 82 shallow, the edge portion 78 of the left side portion 74 and the edge portion 86 of the right side portion 82 are allowed to have high rigidity.

It is preferable that the groove 96 of the coupling portion 90 be shallower than the groove 80 formed in the edge portion 78 of the left side portion 74 and the groove formed in the edge portion 86 of the right side portion 82. The depth of the groove 96 of the coupling portion 90 is from about 5 mm to 10 mm. The passenger typically holds the coupling portion 90 of the grab bar 70 by gripping the entire circumference of the coupling portion 90, not by inserting his/her fingers in the groove 96. By making the groove 96 of the coupling portion 90 shallow as described above, the passenger is allowed to grip the entire circumference of the coupling portion 90 easily.

A groove 116 recessed upward is formed in a rear edge portion 112 of the hip guard 110 near the opening 120. The groove 116 of the rear edge portion 112 is typically formed so as to be deeper than the groove 96 of the coupling portion 90. By forming the groove 116 in the hip guard 110 in this way, the passenger is allowed to grab the hip guard 110 easily.

In the present embodiment, grooves are formed respectively in the left side portion 74, the right side portion 82, and the coupling portion 90 of the grab bar 70 and in the hip guard 110 so that these parts can be grabbed easily. However, it also is possible to employ a configuration in which these parts are provided with at least a step portion so that the passenger can grab the step portion.

Fig. 6 is a perspective view illustrating the condition in which the grab bar 70 is mounted to the right and left seat frames 26, 28 and a cross-member 30 of the body frame 20. To facilitate understanding the mounting structure, the vehicle body cover 40 and the like are not depicted in Fig. 6.

In the present embodiment, the grab bar 70 is mounted to a bracket 27 provided on the left seat frame 26, a bracket 29 provided on the right seat frame 28, and brackets 31, 31 provided on the cross-member 30, as illustrated in Fig. 6.

The mounting structure of the grab bar 70 to the body frame 20 will be explained taking the right seat frame 28 as an example. As illustrated in Fig. 9, a metal collar 142 is inserted through a fitting hole 88 formed in the grab bar 70 and a fitting hole 29A formed in a metal bracket 29 provided on the right seat frame 28, and the grab bar 70 and the bracket 29 are fastened to each other by a bolt 140 and a nut, which is not shown in the drawings. The collar 142 is formed in a substantially tubular shape such that its upper end portion spreads radially. Thus, in the present embodiment, the metal collar 142 is interposed between the bolt 140 and the grab bar 70 when securing the grab bar 70 made of a resin to the bracket 29 made of a metal by the bolt 140 made of a metal. The metal collar 142 is not always necessary when mounting the grab bar 70 to the body frame 20. However, the grab bar 70 can be mounted to the body frame 20 more firmly when the metal collar 142 is interposed.

As described above, the motorcycle 1 according to the present embodiment has the grab bar 70 and the hip guard 110 for restricting a rearward movement of the buttocks of the passenger. Since the hip guard 110 is provided, the passenger is inhibited from moving rearward not just when the motorcycle 1 is running at a constant speed but even when a rearward force acts on the passenger such as to shift the riding position of the passenger to the rear, such as when the motorcycle 1 starts suddenly. Moreover, unlike the conventional backrest, the hip guard 110 is unlikely to get in the way when the passenger stretches an arm rearward because it is low in vertical height. For this reason, the passenger can grab the coupling portion 90 of the grab bar 70 easily by inserting his/her fingers in the opening 120 formed rearward of the hip guard 110. As described above, the passenger can support part of his/her weight by grabbing the grab bar 70 while supporting another part of the weight by the hip guard 110. This improves passenger comfort when a passenger is on board.

As illustrated in Fig. 1, the height difference a between the upper end 114 of the hip guard 110 and the upper end 56 of the second seat 54 is smaller than the height difference h between the upper end 56 of the second seat 54 and the lower end 53 of the top face of the first seat 52. In addition, as illustrated in Fig. 3, the height difference c between the upper end 114 of the hip guard 110 and the upper end 92 of the coupling portion 90 of the grab bar 70 is smaller than the height difference d between the upper end 92 of the coupling portion 90 and the lower end 76 of the left side portion 74 of the grab bar 70. By keeping the height of the hip guard 110 low, the hip guard 110 is unlikely to get in the way when the passenger stretches an arm rearward, so that the passenger can grab the coupling portion 90 more easily.

In the present embodiment, the grab bar 70 and the hip guard 110 are integrally formed with each other. This eliminates the need for the work of assembling the grab bar 70 and the hip guard 110. Moreover, it is possible to avoid chattering and position shifting between the grab bar 70 and the hip guard 110. This further improves passenger comfort when a passenger is on board.

In the present embodiment, the grab bar 70 and the hip guard 110 are formed of a resin. As a result, the grab bar 70 can be made lighter in weight. Moreover, in comparison with a grab bar made of a metal, the passenger is less likely to feel the coldness or the heat of the grab bar when the passenger touches the grab bar in the case where the motorcycle is used in a cold region or an extremely hot region. As a result, the passenger can grab the grab bar 70 more easily.

As illustrated in Fig. 2, the opening 120 has the left edge portion 122A and the right edge portion 122B each formed in a circular arcuate shape as viewed in plan. As a result, when the passenger tries to grab the left side portion 74, the right side portion 82, or the coupling portion 90 by inserting his/her fingers in the opening 120, the passenger can grab these portions easily, and also, the passenger is less likely to suffer a pain in his/her fingers.

In addition, in the present embodiment, the left side portion 74 of the grab bar 70 has a groove 80 (see Fig. 8) recessed upward. The depth of the groove 80 is deeper in the front portion 75 than in the rear portion 77 of the left side portion 74. Likewise, a groove (not shown) recessed upward is formed in the right side portion 82. The depth of the groove is deeper in the front portion 83 than in the rear portion 85 of the right side portion 82. As a result, the passenger can grab the left side portion 74 and the right side portion 82 easily and reliably.

Moreover, in the present embodiment, the depth of the groove 96 (see Fig. 7) of the coupling portion 90 of the grab bar 70 is shallower than the depth of the groove 80 of the left side portion 74 and that of the groove of the right side portion 82. This allows the passenger to grip the entire circumference of the coupling portion 90 easily.

In the present embodiment, the hip guard 110 has the groove 116 that is recessed upward and formed in the rear edge portion 112. Therefore, by inserting the fingers in the groove 116, the passenger can grab the hip guard 110 easily. As a result, a wider variety of uses are made possible.

As illustrated in Fig. 3, in the present embodiment, the rear end 98 of the coupling portion 90 of the grab bar 70 is positioned frontward of the rear end 42 of the vehicle body cover 40. In other words, the grab bar 70 does not protrude rearward from the vehicle body cover 40. Thus, the front-to-rear length of the motorcycle 1 can be prevented from becoming longer even if the grab bar 70 is provided. Furthermore, since the coupling portion 90 is not too distant rearwardly, even a small passenger can grab the grab bar 70 (especially the coupling portion 90) easily.

### REFERENCE SIGNS LIST

- 1: -- Motorcycle
- 40: -- Vehicle body cover
- 42: -- Rear end of the vehicle body cover
- 50: -- Seat
- 52: -- First seat
- 54: -- Second seat
- 56: -- Upper end of the second seat
- 58: -- Lower end of the first seat
- 70: -- Grab bar
- 74: -- Left side portion
- 76: -- Lower end of the left side portion
- 80: -- Groove
- 82: -- Right side portion
- 84: -- Lower end of the right side portion
- 90: -- Coupling portion
- 96: -- Groove
- 98: -- Rear end of the coupling portion
- 110: -- Hip guard
- 112: -- Rear edge portion
- 114: -- Upper end of the hip guard
- 116: -- Groove
- 120: -- Opening

## Claims

1. A motorcycle (1) comprising:
a first seat (52) for a rider to be seated;
a second seat (54), disposed rearward of the first seat (52), for a passenger to be seated; and
a grab bar (70) having a left side portion (74) extending rearward from a left side of the second seat (54), a right side portion (82) extending rearward from a right side of the second seat (54), and a coupling portion (90) coupling the left side portion (74) and the right side portion (82) to each other at the rear of the second seat (54);
a hip guard (110) disposed between the second seat (54) and the coupling portion (90) with respect to a vehicle fore-and-aft direction and coupling the left side portion (74) and the right side portion (82) to each other, wherein
an upper end (114) of the hip guard (110) is disposed at a position higher than the second seat (54) and the coupling portion (90);
an opening (120) is formed between the hip guard (110) and the coupling portion (90), as viewed in plan, so that the coupling portion (90) is adapted to be grabbed by the passenger by inserting his/her fingers in the opening (120); and
each of the left side portion (74) and the right side portion (82) of the grab bar (70) has a groove (80) recessed upward, so that the left side portion (74) and the right side portion (82) are adapted to be grabbed by the passenger by inserting his/her fingers in the grooves (80);
**characterized in that**
an upper end (92) of the coupling portion (90) of the grab bar (70) is formed at a position higher than an upper end (56) of the second seat (54); and
each of the grooves (80) is deeper in a front portion of each of the left and right side portions (74, 82) than in a rear portion of each of the left and right side portions (74, 82).

2. The motorcycle (1) according to claim 1, wherein a height difference between the upper end (114) of the hip guard (110) and the upper end (92) of the coupling portion (90) of the grab bar (70) is smaller than a height difference of the upper end (92) of the coupling portion (90) of the grab bar (70) from one of a lower end (76) of the left side portion (74) and a lower end (84) of the right side portion (82) that is lower than the other.

3. The motorcycle (1) according to claim 1, wherein the grab bar (70) and the hip guard (110) are integrally formed with each other.

4. The motorcycle (1) according to claim 1, wherein the grab bar (70) and the hip guard (110) are formed of a resin.

5. The motorcycle (1) according to claim 1, wherein the opening (120) has left and right edge portions (122A, 122B) each formed in a circular arcuate shape, as viewed in plan.

6. The motorcycle (1) according to claim 1, wherein:
the coupling portion (90) of the grab bar (70) has a groove (96) recessed upward; and
the groove (96) of the coupling portion (90) is shallower than the groove (80) of the left side portion (74) and the groove (80) of the right side portion (82).

7. The motorcycle (1) according to claim 1, wherein the hip guard (110) has a groove (116) recessed upward and formed in a rear edge portion (112) thereof.

8. The motorcycle (1) according to claim 1, wherein a height difference between the upper end (114) of the hip guard (110) and the upper end (56) of the second seat (54) is smaller than a height difference between the upper end (56) of the second seat (54) and a lower end of a top face of the first seat (52).

9. The motorcycle (1) according to claim 1, further comprising:
a vehicle body cover (40); and wherein
a rear end of the coupling portion (90) of the grab bar (70) is positioned frontward of a rear end (42) of the vehicle body cover (40).

## Patentansprüche

1. Ein Motorrad (1), das folgende Merkmale aufweist:
einen ersten Sitz (52) zum Sitzen für einen Fahrer;
einen zweiten Sitz (54), der hinter dem ersten Sitz (52) angeordnet ist, zum Sitzen für einen Beifahrer; und
eine Griffstange (70), die einen linken Seitenabschnitt (74), der sich von einer linken Seite des zweiten Sitzes (54) nach hinten erstreckt, einen rechten Seitenabschnitt (82), der sich von einer rechten Seite des zweiten Sitzes (54) nach hinten erstreckt, und einen Kopplungsabschnitt (90) aufweist, der den linken Seitenabschnitt (74) und den rechten Seitenabschnitt (82) an der Rückseite des zweiten Sitzes (54) miteinander koppelt;
einen Hüftschutz (110), der zwischen dem zweiten Sitz (54) und dem Kopplungsabschnitt (90) bezüglich einer Richtung des Fahrzeugs von vorne nach hinten angeordnet ist, und den linken Seitenabschnitt (74) und den rechten Seitenabschnitt (82) miteinander koppelt, wobei
ein oberes Ende (114) des Hüftschutzes (110) an einer Position angeordnet ist, die höher ist als der zweite Sitz (54) und der Kopplungsabschnitt (90);
eine Öffnung (120) von oben gesehen zwischen dem Hüftschutz (110) und dem Kopplungsabschnitt (90) gebildet ist, so dass der Kopplungsabschnitt (90) angepasst ist, damit der Beifahrer denselben durch Einfügen der Finger in die Öffnung (120) greifen kann; und
sowohl der linke Seitenabschnitt (74) als auch der rechte Seitenabschnitt (82) der Griffstange (70) eine Rille (80) aufweisen, die nach oben ausgenommen ist, so dass der linke Seitenabschnitt (74) und der rechte Seitenabschnitt (82) angepasst sind, damit der Beifahrer dieselben durch Einfügen der Finger in die Rillen (80) greifen kann;
**dadurch gekennzeichnet, dass**
ein oberes Ende (92) des Kopplungsabschnitts (90) der Griffstange (70) an einer Position gebildet ist, die höher ist als ein oberes Ende (56) des zweiten Sitzes (54); und
jede der Rillen (80) in einem Vorderabschnitt von jedem des linken und des rechten Seitenabschnitts (74, 82) tiefer ist als in einem hinteren Abschnitt von jedem des linken und rechten Seitenabschnitts (74, 82).

2. Das Motorrad (1) gemäß Anspruch 1, bei dem eine Höhendifferenz zwischen dem oberen Ende (114) des Hüftschutzes (110) und dem oberen Ende (92) des Kopplungsabschnitts (90) der Griffstange (70) geringer ist als eine Höhendifferenz des oberen Endes (92) des Kopplungsabschnitts (90) der Griffstange (70) von entweder einem unteren Ende (76) des linken Seitenabschnitts (74) und einem unteren Ende (84) des rechten Seitenabschnitts (82), der niedriger ist als der andere.

3. Das Motorrad (1) gemäß Anspruch 1, bei dem die Griffstange (70) und der Hüftschutz (110) einstückig miteinander gebildet sind.

4. Das Motorrad (1) gemäß Anspruch 1, bei dem die Griffstange (70) und der Hüftschutz (110) aus einem Harz gebildet sind.

5. Das Motorrad (1) gemäß Anspruch 1, bei dem die Öffnung (120) linke und rechte Kantenabschnitte (122A, 122B) aufweist, die jeweils von oben gesehen in einer kreisförmigen Bogenform gebildet sind.

6. Das Motorrad (1) gemäß Anspruch 1, bei dem:
der Kopplungsabschnitt (90) der Griffstange (70) eine Rille (96) aufweist, die nach oben ausgenommen ist; und
die Rille (96) des Kopplungsabschnitts (90) flacher ist als die Rille (80) des linken Seitenabschnitts (74) und die Rille (80) des rechten Seitenabschnitts (82).

7. Das Motorrad (1) gemäß Anspruch 1, bei dem der Hüftschutz (110) eine Rille (116) aufweist, die nach oben ausgenommen ist und in einem hinteren Kantenabschnitt (112) desselben gebildet ist.

8. Das Motorrad (1) gemäß Anspruch 1, bei dem eine Höhendifferenz zwischen dem oberen Ende (114) des Hüftschutzes (110) und dem oberen Ende (56) des zweiten Sitzes (54) geringer ist als eine Höhendifferenz zwischen dem oberen Ende (56) des zweiten Sitzes (54) und einem unteren Ende einer Oberfläche des ersten Sitzes (52).

9. Das Motorrad (1) gemäß Anspruch 1, das ferner folgende Merkmale aufweist:
eine Fahrzeugkörperabdeckung (40); und wobei
ein hinteres Ende des Kopplungsabschnitts (90) der Griffstange (70) vor einem hinteren Ende (42) der Fahrzeugkörperabdeckung (40) positioniert ist.

## Revendications

1. Motocyclette (1) comprenant:
un premier siège (52) servant à un conducteur pour s'asseoir;
un deuxième siège (54) disposé à l'arrière du premier siège (52), servant à un passager pour s'asseoir; et
une barre d'appui (70) présentant une partie latérale gauche (74) s'étendant vers l'arrière à partir du côté gauche du deuxième siège (54), une partie latérale droite (82) s'étendant vers l'arrière à partir du côté droit du deuxième siège (54), et une partie de couplage (90) couplant la partie latérale gauche (74) et la partie latérale droite (82) l'une à l'autre à l'arrière du deuxième siège (54);
un protège-hanche (110) disposé entre le deuxième siège (54) et la partie de couplage (90) dans une direction de l'arrière vers l'avant du véhicule et couplant la partie latérale gauche (74) et la partie latérale droite (82) l'une à l'autre, où
une extrémité supérieure (114) du protège-hanche (110) est disposée en une position plus élevée que le deuxième siège (54) et la partie de couplage (90);
une ouverture (120) est formée entre le protège-hanche (110) et la partie de couplage (90), tel que vu en plan, de sorte que la partie de couplage (90) soit adaptée pour être saisie par le passager en introduisant ses doigts dans l'ouverture (120); et
chacune de la partie latérale gauche (74) et de la partie latérale droite (82) de la barre d'appui (70) présente une rainure (80) en retrait vers le haut, de sorte que la partie latérale gauche (74) et la partie latérale droite (82) soient adaptées pour être saisies par le passager en insérant ses doigts dans les rainures (80);
**caractérisé par le fait que**
une extrémité supérieure (92) de la partie de couplage (90) de la barre d'appui (70) est formée en une position plus élevée qu'une extrémité supérieure (56) du deuxième siège (54); et
chacune des rainures (80) est plus profonde dans une partie avant de chacune des parties latérales gauche et droite (74, 82) que dans une partie arrière de chacun des parties latérales gauche et droite (74, 82).

2. Motocyclette (1) selon la revendication 1, dans laquelle une différence de hauteur entre l'extrémité supérieure (114) du protège-hanche (110) et l'extrémité supérieure (92) de la partie de couplage (90) de la barre d'appui (70) est inférieure à une différence de hauteur de l'extrémité supérieure (92) de la partie d'accouplement (90) de la barre d'appui (70) de l'une parmi une extrémité inférieure (76) de la partie latérale gauche (74) et une extrémité inférieure (84) de la partie latérale droite (82) qui est plus basse que l'autre.

3. Motocyclette (1) selon la revendication 1, dans laquelle la barre d'appui (70) et le protège-hanche (110) sont formés solidaires l'un de l'autre.

4. Motocyclette (1) selon la revendication 1, dans laquelle la barre d'appui (70) et le protège-hanche (110) sont formés en une résine.

5. Motocyclette (1) selon la revendication 1, dans laquelle l'ouverture (120) présente des parties de bord gauche et droite (122A, 122B) formées, chacune, selon une forme arquée circulaire, tel que vu en plan.

6. Motocyclette (1) selon la revendication 1, dans laquelle:
la partie de couplage (90) de la barre d'appui (70) présente une rainure (96) en retrait vers le haut; et
la rainure (96) de la partie de couplage (90) est moins profonde que la rainure (80) de la partie latérale gauche (74) et la rainure (80) de la partie latérale droite (82).

7. Motocyclette (1) selon la revendication 1, dans laquelle le protège-hanche (110) présente une rainure (116) en retrait vers le haut et formé dans une partie de bord arrière (112) de ce dernier.

8. Motocyclette (1) selon la revendication 1, dans laquelle une différence de hauteur entre l'extrémité supérieure (114) du protège-hanche (110) et l'extrémité supérieure (56) du deuxième siège (54) est inférieure à une différence de hauteur entre l'extrémité supérieure (56) du deuxième siège (54) et une extrémité inférieure d'une face supérieure du premier siège (52).

9. Motocyclette (1) selon la revendication 1, comprenant par ailleurs:
un couvercle de carrosserie de véhicule (40); et dans lequel
une extrémité arrière de la partie de couplage (90) de la barre d'appui (70) est positionnée à l'avant de l'extrémité arrière (42) du couvercle de carrosserie de véhicule (40).
